Europäisches Patentamt

European Patent Office

Office européen des brevets

(19)

(11) Numéro de publication : **0 468 836 B1**

# (12) FASCICULE DE BREVET EUROPEEN

(45) Date de publication du fascicule du brevet :
17.08.94 Bulletin 94/33

(51) Int. Cl.⁵ : **G09G 1/16**

(21) Numéro de dépôt : **91401761.1**

(22) Date de dépôt : **27.06.91**

(54) **Dispositif d'entrée sortie de données pour l'affichage d'informations et procédé mis en oeuvre par un tel dispositif.**

(30) Priorité : **23.07.90 FR 9009363**

(43) Date de publication de la demande :
**29.01.92 Bulletin 92/05**

(45) Mention de la délivrance du brevet :
**17.08.94 Bulletin 94/33**

(84) Etats contractants désignés :
**DE ES FR GB IT SE**

(56) Documents cités :
**EP-A- 0 077 560**
**EP-A- 0 139 386**
**DE-A- 3 138 930**
**US-A- 4 486 856**

(73) Titulaire : **BULL S.A.**
**Tour BULL,**
**1, place Carpeaux**
**F-92800 Puteaux (FR)**

(72) Inventeur : **Baillif, Christian**
**121, avenue de Malakoff,**
**PC 8M006**
**F-75116 Paris (FR)**

EP 0 468 836 B1

Jouve, 18, rue Saint-Denis, 75001 PARIS

## Description

La présente invention concerne un dispositif d'entrée sortie de données pour l'affichage d'informations sur un écran, élaboré autour d'un microprocesseur coopérant au moyen d'une pluralité de lignes de bus d'une part avec des moyens de mémorisation affectés aux programmes du microprocesseur et d'autre part avec la partie vidéo par l'intermédiaire de moyens de mémorisation affectés à l'écran et de moyens de mémorisation affectés à un générateur de caractères. Elle concerne également un procédé de séquencement pour la distribution des cycles mémoire et la régulation du flux à l'intérieur des moyens de mémorisation dudit dispositif.

Traditionnellement, un tel dispositif d'entrée sortie de données pour l'affichage d'informations sur un écran, appelé également couramment terminal, comporte des mémoires spécifiques affectées aux programmes, à l'écran et au(x) générateur(s) de caractères (EP-A-0139386). Chaque mémoire spécifique est alors connectée au bus système au moyen d'un bus qui lui est propre.

Cependant le choix d'une telle architecture de terminal entraîne des inconvénients. En effet dans le prix d'un terminal le coût des mémoires intervient pour une part importante, particulièrement lorsqu'il s'agit de terminaux mode caractère bas de gamme. Force est de constater de plus une volonté de tendre vers une miniaturisation et cette solution connue ne permet pas objectivement de tendre vers un réduction de volume du terminal. En outre, l'architecture à pluralité de mémoires qui impose l'emploi d'une pluralité de bus offre moins de souplesse dans le dimensionnement et la répartition des différentes fonctions.

La présente invention a pour but de remédier à ces divers inconvénients et propose un dispositif du genre précité dont le prix de revient est très sensiblement réduit, qui offre une grande souplesse d'emploi tout en présentant de bonnes performances.

Pour cela le dispositif comme revendiqué est remarquable en ce qu'il est monolithiquemment intégré dans un circuit d'application spécifique, les différents moyens de mémorisation précités étant principalement constitués d'une mémoire unique dans laquelle des zones spécifiques respectivement aux programmes, à l'écran et du générateur de caractères ont étés allouées pour stocker les informations auxquelles il est désiré accéder, l'accès aux différentes zones spécifiques étant autorisé par une ligne de bus mémoire unique et géré selon un procédé de séquencement mis en oeuvre par des moyens de séquencement microprogrammés.

Ainsi l'idée de l'invention permet de tendre vers une vision d'une mémoire uniforme de par le choix d'une architecture à bus mémoire unique, offrant de la sorte plus de souplesse dans le dimensionnement et la répartition des fonctions gestion écran, police de caractères et programme. En effet les fonctionnalités du terminal sont étendues et, par exemple en sortant le bus mémoire du circuit, il est offert la possibilité d'augmenter la capacité mémoire pour étendre le jeu de caractères, augmenter le nombre d'écrans mémorisés par le terminal, etc...

De plus la réalisation d'un terminal bas de gamme par intégration sur un même circuit permet d'en abaisser le coût de manière significative.

Enfin ce type de dispositif peut être utilisé pour toute une famille de terminaux où les fonctionnalités sont dépendantes de la capacité et du type (mémoire morte, mémoire vive) des blocs mémoire, par exemple, générateur de caractères en mémoire morte, possibilité de charger partiellement ou totalement le générateur de caractères, fenêtrage dans l'image (fonction de la capacité de la zone mémoire vive écran), extension du nuage de points, etc...

Le dispositif selon l'invention est remarquable en ce que les moyens de mémorisation comportent, associée à la mémoire unique, une antémémoire de petite taille insérée entre le microprocesseur et la ligne de bus mémoire unique, dans ce cas le paramètre prépondérant est la taille d'une ligne. Le taux de succès est ainsi amélioré et une réduction significative de la charge occasionnée par le microprocesseur sur la zone mémoire spécifique peut être obtenue si une ligne de l'antémémoire est chargée avec un seul accès à la zone mémoire spécifique.

Le dispositif selon l'invention est remarquable en ce que les moyens de mémorisation comportent de plus un registre du type premier entré premier sorti inséré entre la partie vidéo et la ligne de bus mémoire unique. L'introduction d'un registre du type premier entré premier sorti appelé également FIFO permet d'étaler les accès sur la durée totale d'une ligne vidéo. La taille de la FIFO, c'est-à-dire le nombre de mots qu'elle peut contenir, doit être choisie suffisamment grande de telle manière que les accès au générateur de caractères utilisent la totalité de la bande passante de la mémoire unique. La zone mémoire spécifique affectée au générateur de caractères est partagée entre la vidéo et le microprocesseur. Ainsi dans le cas présent, l'emploi d'une FIFO a pour but non pas de diminuer le temps de cycle de la mémoire unique, mais de mieux utiliser la bande passante de celle-ci.

Selon une caractéristique remarquable du présent dispositif, le registre du type premier entré premier sorti fournit en outre trois indications relatives à son état : registre plein, registre vide ou presque vide et nombre de mots dans le registre inférieur à W, W étant le nombre de mots qu'il faut accumuler dans le registre pour pouvoir servir toutes les demandes du microprocesseur pendant la partie utile du balayage ligne de la partie vidéo. Ainsi un cycle ne peut être attribué immédiatement au microprocesseur qu'à la condition que la FIFO ne soit pas vide. La situation FIFO vide n'apparaît que, soit en début de ligne introduisant un délai de durée égale au temps de cycle de la mémoire unique dans le cycle du microprosesseur, soit, si le microprocesseur dispose de n accès, lorsque celui-ci demande un $(n + 1)^{\text{ème}}$ accès, ce cycle étant alors différé jusqu'à la fin de la ligne.

Le dispositif selon l'invention est remarquable en outre en ce que les moyens de mémorisation comportent au moins deux registres tampons de ligne insérés entre la partie vidéo et la ligne de bus mémoire unique.

En effet, si la cellule caractères a L lignes, le mot (attribut + caractère) est lu L fois. En utilisant des registres tampons de ligne pour mémoriser une rangée de caractères, il suffit, pour étaler le chargement d'un tel registre durant toute la visualisation d'une rangée (L lignes TV), de disposer de deux de ces registres, l'un étant utilisé par la vidéo alors que l'autre est en chargement.

Selon une caractéristique essentielle du dispositif selon l'invention la distribution des cycles mémoire et la régulation du flux à l'intérieur des moyens de mémorisation sont avantageusement obtenues grâce à la mise en oeuvre d'un procédé de séquencement comme revendiqué. Ce procédé de séquencement est remarquable en ce que l'attribution d'un cycle mémoire est réalisée en synchronisme avec la fréquence de balayage ligne de la partie vidéo et décidée subséquemment à une série de tests destinés à déterminer la priorité pour l'exécution des différentes tâches, notamment le prélèvement dans la zone spécifique de la mémoire affectée à l'écran pour le chargement des registres tampons de ligne, la présentation d'un mot de la zone spécifique de la mémoire affectée au générateur de caractères au registre du type premier entré premier sorti ou toute demande d'accès respectivement du microprocesseur à la zone spécifique aux programmes, des registres tampons de ligne à la zone spécifique à l'écran ou du registre du type premier entré premier sorti à la zone spécifique affectée au générateur de caractères.

Selon ce procédé, l'attribution des cycles mémoire est décidée à la suite d'un série de tests tenant compte d'une part des demandes du microprocesseur et du quota d'accès qui lui est attribué, du générateur de caractères et des registres tampons de ligne, d'autre part des trois indications relatives au remplissage de la FIFO et enfin de l'état d'un compteur associé aux accès du microprocesseur, les résultats des tests étant exploités de telle manière que :

- tant que le registre premier entré premier sorti est vide ou presque vide, le chargement dudit registre soit prioritaire ;
- si le registre premier entré premier sorti n'est pas vide ou presque vide, les accès du microprocesseur soient prioritaires tant que le quota d'accès attribué au microprocesseur n'est pas épuisé, sachant qu'en outre un cycle n'est comptabilisé dans ledit quota que si les registres tampons de ligne ne sont pas pleins ;
- le remplissage des registres tampons de ligne soit prioritaire par rapport au remplissage du registre premier entré premier sorti si le nombre de mots en attente dans ce dernier registre est supérieur à W ou si le quota attribué au microprocesseur est épuisé et que de plus le registre premier entré premier sorti n'est pas vide ou presque vide.

Ainsi dans le dispositif selon l'invention ce procédé permet de gérer une pluralité de mémoires ou de zones mémoire sans ralentissement du système et donc en utilisant à temps complet la capacité du microprocesseur et de la vidéo.

La description suivante en regard des dessins annexés, le tout donné à titre d'exemple, fera bien comprendre comment l'invention peut être réalisée.

La figure 1 donne une représentation schématique d'un dispositif de l'art antérieur.

La figure 2 propose une représentation schématique du dispositif selon l'invention.

La figure 3 présente un exemple de schéma par étapes permettant d'illustrer le procédé de séquencement mis en oeuvre par le dispositif selon l'invention.

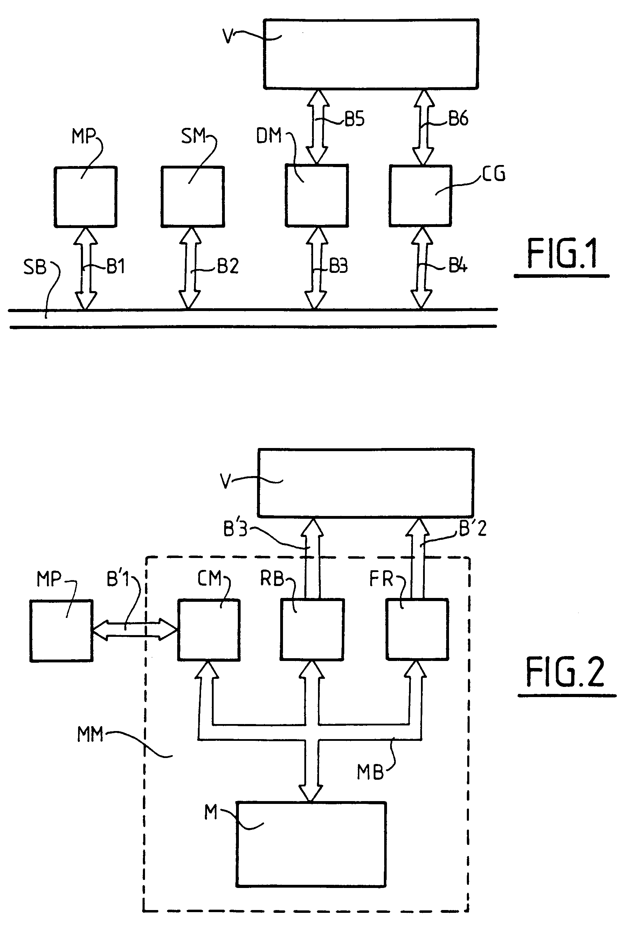

Sur la figure 1 est donnée une représentation schématique d'un dispositif d'entrée sortie de données pour l'affichage sur un écran qui permet de donner une vision synthétique et pratique de l'art antérieur connu. Ce dispositif de l'art antérieur est élaboré autour d'un microprocesseur MP coopérant au moyen d'une pluralité de lignes de bus, SB (bus système) et B1 à B6, d'une part avec des moyens de mémorisation SM affectés aux programmes du microprocesseur (par exemple une mémoire vive système) et d'autre part avec la partie vidéo V par l'intermédiaire de moyens de mémorisation DM affectés à l'écran (par exemple une mémoire vive écran) et de moyens de mémorisation CG affectés à un générateur de caractères (par exemple une mémoire morte).

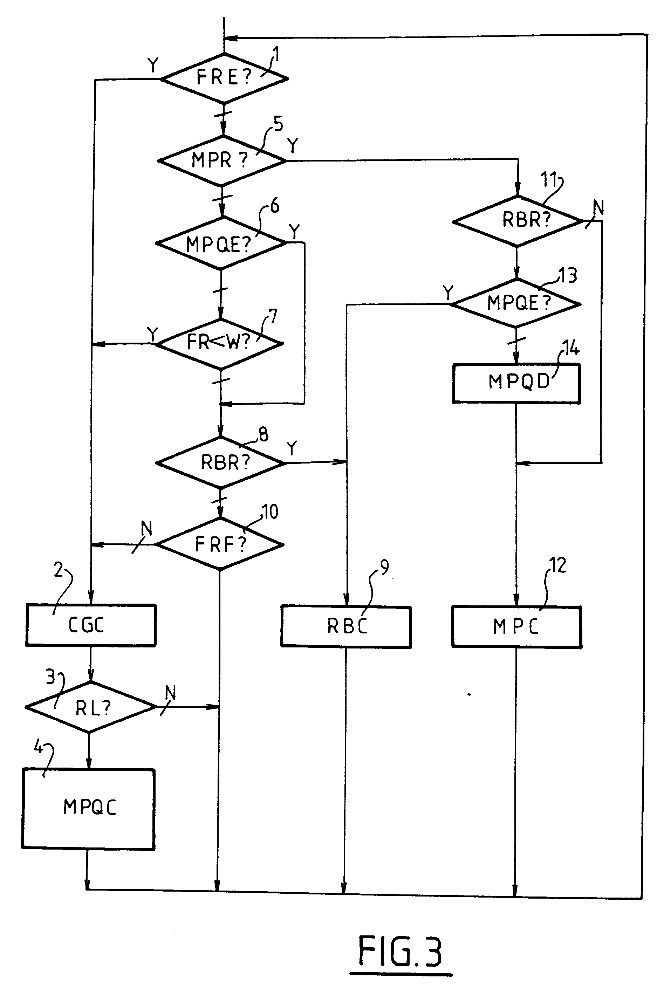

Sur la figure 2 est proposée une représentation schématique du dispositif qui conformément à l'invention est monolithiquement intégré dans un circuit d'application spécifique . Les differents moyens de mémorisation MM sont principalement constitués d'une mémoire unique M dans laquelle des zones spécifiques respectivement aux programmes, à l'écran et du générateur de caractères ont été allouées pour stocker les informations auxquelles il est désiré accéder. L'accès aux differentes zones spécifiques est autorisé par une ligne de bus mémoire MB unique et géré selon un procédé de séquencement qui sera décrit avec la figure 3, procédé qui est mis en oeuvre par des moyens de séquencement microprogrammés qui dans un but de simplification sont inclus dans l'environnement du microprocesseur référencé MP.

Selon une des caractéristiques du dispositif les moyens de mémorisation comportent une antémémoire CM de petite taille qui est avantageusement insérée entre le microprocesseur MP et la ligne de bus mémoire unique MB. Ceci entraîne une réduction significative de la charge occasionnée par le microprocesseur MP sur la mémoire M à condition qu'une ligne de l'antémémoire CM ne soit chargée qu'avec un seul accès à la mémoire, c'est-à-dire par exemple avec une mémoire 16 bits pour un microprocesseur 8 bits. La liaison entre l'antémémoire CM et le microprocesseur MP est obtenue par l'intermédiaire de la ligne de bus B′1.

Une autre solution pourrait consister à utiliser un microprocesseur 16 bits.

De manière caractéristique également les moyens de mémorisation comportent un registre du type premier entré premier sorti FR inséré entre la partie vidéo V (ligne de bus B′2) et la ligne de bus mémoire MB. Le registre FR en outre fournit trois indications relatives à son état :

- registre plein
- registre vide ou presque vide
- nombre de mots dans le registre inférieur à W, W étant le nombre de mots qu'il faut accumuler dans le registre pour pouvoir servir toutes les demandes du microprocesseur pendant la partie utile du balayage ligne de la partie vidéo.

En considérant par exemple la répartition des accès suivants, 132 accès suivis d'un temps mort correspondant au retour ligne, l'introduction du registre FR permet d'étaler lesdits accès sur la totalité de la durée d'une ligne vidéo soit par exemple 32 µs. Dans cet exemple le temps moyen d'accès tm est donc de 242 ns.

En supposant un format 132 caractères par rangée, la matrice caractère a 9 points de large. Si la durée d'un point est de 19 ns ceci permet d'engendrer un accès à la zone affectée au générateur de caractères toutes les 171 ns. La taille du registre FR peut être ainsi déterminée en conservant l'exemple de répartition d'accès (132 accès) précité :

$$\text{Taille de FR} = \frac{(tm - 171)}{tm} . 132 < 40 \text{ mots.}$$

En choisissant un registre FR d'au moins 40 mots, le temps de cycle de la mémoire peut être de 240 ns. Les accès à la zone affectée au générateur de caractères utilisent ainsi la totalité de la bande passante de la mémoire. Sachant que la zone mémoire affectée au générateur de caractères est partagée entre la vidéo et le microprocesseur, il apparaît que le principal avantage à employer le registre FR n'est pas de diminuer le temps de cycle de la mémoire mais plutôt de mieux utiliser la bande passante de celle-ci.

S'il n'y avait pas de registre FR, le microprocesseur devrait attendre le retour ligne car durant la partie utile de la vidéo la génération de caractères monopolise la mémoire à 100 % puis se trouve dans l'incapacité d'utiliser la totalité des cycles mémoire disponibles.

Lorsqu'un registre de type FIFO tel que FR est utilisé, sa taille est limitée par le nombre de cycles n qu'il est possible d'anticiper (nombre n qui est égal au rapport entre la durée du retour ligne et le temps de cycle de la mémoire) et par le nombre de cycles n′ que le microprocesseur peut dérober durant la partie utile de la vidéo (nombre n′ qui est égal au rapport entre la durée de la partie utile de la vidéo et le temps d'accès microprocesseur). La taille du registre FR est de préférence choisie égale au nombre n′ > 40.

Le microprocesseur dispose de n accès toutes les 32 µs. Un cycle peut lui être attribué immédiatement à la seule condition que le registre FR ne soit pas vide. La situation FIFO vide n'apparaît qu'en début de ligne, introduisant un délai de 171 ns dans le cycle du microprocesseur ou que lorsque le microprocesseur tente un $(n+1)^{\text{ème}}$ accès, ce cycle étant différé jusqu'à la fin de la ligne.

Une autre solution pourrait consister à utiliser une mémoire plus rapide qui permettrait de satisfaire les besoins du microprocesseur, mémoire qui cependant serait plus coûteuse.

Enfin selon une caractéristique du dispositif de l'invention, les moyens de mémorisation comportent en outre au moins deux registres tampons de ligne RB insérés entre la porte vidéo V (ligne de bus B′3) et la ligne de bus mémoire unique MB.

Comme cela a été vu précédemment si la cellule caractère a L lignes, le mot (attribut + caractère) est lu L fois. Pour étaler le chargement d'un registre tampon durant toute la visualisation d'une rangée (L lignes TV), il suffit de disposer de deux registres tampons, l'un utilisé par la vidéo, l'autre en chargement.

Toutefois durant un défilement d'une partie de l'image, au moins deux rangées ne sont pas visualisées complètement ce qui réduit le temps alloué au chargement d'un registre RB.

Dans le cas extrême, les cellules sont jointes et une rangée n'est visualisée que durant une ligne TV. Ceci ne laisse que 32 µs pour recharger un registre RB. Si la mémoire ne peut fournir 132 mots, des parasites ap-

EP 0 468 836 B1

paraissent sur l'écran. Un troisième registre tampon de ligne permet de résoudre ce problème. Le défilement d'un bandeau de X rangées de caractères consomme (X+1) rangées, le troisième registre permet de constituer une réserve d'une rangée qui sera consommée sur le premier bandeau défilant.

Lorsque plusieurs bandeaux sont en train de défiler le cas est encore plus critique si, d'une part chaque bandeau a la taille d'une cellule (L lignes) et d'autre part tous les bandeaux défilent. Ce cas, dont la probabilité d'apparition est faible, entraîne, pour la visualisation de chaque bandeau, une consommation du contenu de deux registres tampons de ligne. Une solution à ce problème consiste à prévoir un système à quatre registres tampons de ligne dont deux sont chargés pendant la visualisation d'un bandeau.

Lorsque la présentation d'une fenêtre est désirée sur l'écran, du point de vue du nombre d'accès à la mémoire et s'il est évité de prélever, dans la zone mémoire affectée à l'écran, les caractères du fond qui sont cachés par la fenêtre, ceci n'entraîne pas plus de contrainte que dans le cas d'un bandeau. Néanmoins pour éviter de prélever les mots (caractère + attribut) il ne doit pas y avoir de propagation d'attribut de champ.

Cependant la gestion d'un tel découpage est plus délicate et une solution consiste à doubler avantageusement le nombre de registres tampons de ligne en attribuant ainsi un jeu de deux registres pour le fond de l'écran et un autre jeu de deux registres pour la fenêtre.

En outre un système à quatre registres tampons de ligne permet de réduire notablement le débit induit par la lecture de la zone mémoire affectée à l'écran tout en autorisant des modes de visualisation élaborés.

Ainsi le partage d'une mémoire entre le microprocesseur, la lecture du générateur de caractères et la lecture de la zone affectée à l'écran suppose une utilisation optimale de la bande passante de cette mémoire. Cependant une bonne distribution des accès et donc des cycles mémoire et une régulation du flux sont nécessaires et seront avantageusement mises en oeuvre au moyen d'un procédé de séquencement. Ce procédé est remarquable en ce que l'attribution d'un cycle mémoire est réalisée en synchronisme avec la fréquence de balayage ligne de la partie vidéo et décidée subséquemment à une série de tests destinés à déterminer la priorité pour l'exécution des différentes tâches, notamment le prélèvement dans la zone spécifique de la mémoire affectée à l'écran pour le chargement des registres tampons de ligne, la présentation d'un mot de la zone spécifique de la mémoire affectée au générateur de caractères au registre du type premier entré premier sorti ou toute demande d'accès respectivement du microprocesseur à la zone spécifique aux programmes, des registres tampons de ligne à la zone spécifique à l'écran ou du registre du type premier entré premier sorti à la zone spécifique affectée au générateur de caractères.

Selon ce procédé l'attribution des cycles mémoire est décidée à la suite d'une série de tests tenant compte d'une part des demandes du microprocesseur et du quota d'accès qui lui est attribué, du générateur de caractères et des registres tampons de ligne, d'autre part des trois indications relatives au remplissage du registre du type premier entré premier sorti et enfin de l'état d'un compteur associé aux accès du microprocesseur.

Lorsque la mémoire n'est pas surdimensionnée, comme c'est le cas pour le dispositif selon l'invention qui est désiré peu onéreux, les règles de principe de régulation du flux sont les suivantes :
- les accès des registres tampons de ligne peuvent être étalés sur la totalité d'une ligne, la distribution étant sans importance.
- les accès du générateur de caractères peuvent être étalés, mais le registre FIFO ne doit jamais être vide.
- les accès du microprocesseur doivent être servis le plus tôt possible afin de minimiser le nombre d'attentes. En cas de surcharge, le microprocesseur est le seul dispositif qui peut attendre. La distribution des demandes du microprocesseur n'est pas maîtrisée.

De manière générale le registre FIFO ne doit jamais être vide, une réserve de deux mots est indispensable. L'indication FIFO vide ou presque vide est un signal d'alerte qui doit rendre prioritaire le remplissage de ce registre.

De même, il est essentiel de garantir le chargement des registres tampons de ligne en gênant le moins possible le microprocesseur. Egalement et de manière idéale, le rythme de remplissage des registres tampons de ligne est dépendant de l'état du registre FIFO, notamment du nombre de mots en attente dans ce dernier registre et de l'utilisation qui en sera faite.

Pour garantir le chargement des registres tampons de ligne dans le cas limite où la bande passante de la mémoire serait insuffisante, il faut réduire le nombre d'accès attribués au microprocesseur. Ainsi le quota d'accès attribué au microprocesseur est déterminé en fonction du remplissage des registres tampons de ligne, lui-même dépendant de l'état du registre FIFO. Le quota est fixé pour une tranche de temps, dans notre exemple précédent elle est de 32 µs.

Avantageusement deux procédés s'offrent à la résolution du problème de la fixation du quota du microprocesseur.

Selon un premier procédé le dit quota une fois déterminé reste valable jusqu'à ce que le registre premier entré premier sorti soit plein ou qu'un quota inférieur soit requis pour garantir le chargement des registres tampons de ligne, à chaque retour ligne le quota qui est déterminé en fonction du remplissage du registre premier entré premier sorti devenant le quota effectif du microproceseur si ce dernier registre est plein ou si ce quota est inférieur au dernier quota déterminé.

En suivant cette méthode le chargement du registre est quasiment linéaire, mais il n'est pas tenu compte des éventuelles accélérations dues aux temps morts du microprocesseur.

Selon un second procédé, à chaque retour ligne le quota du microprocesseur est déterminé pour la prochaine tranche de temps, tranche de temps qui correspond à la durée totale du balayage d'une ligne, le chargement du registre premier entré premier sorti étant alors effectué suivant une courbe de la forme $y = k(1 - a^{-x})$, où en première approximation k représente la taille d'une mémoire circulaire utilisée en tant que registre tampon de ligne et a est une fonction du nombre de colonnes de caractères et du nombre k, x étant une variable liée à la hauteur d'une cellule caractère alors que le résultat y donne le nombre de caractères dans les registres tampons de ligne à la fin de chaque balayage de ligne.

En effet, la résolution du système suivant :

$$k(1 - a^{-2H}) = y_1$$
$$k(1 - a^{-1}) = y_2$$

où $y_1$ représente la taille d'une mémoire circulaire utilisée comme registre tampon de ligne et $y_2$ correspond à la taille d'une rangée de caractères, permet de déterminer en première approximation k et a, sachant que H est la hauteur d'une cellule caractère.

Cette seconde méthode permet de favoriser le microprocesseur, s'il n'utilise pas entièrement un quota, en revanche ce dernier est davantage freiné durant les premières tranches de temps. Il est à remarquer également que cette solution est intéressante si le code du microprocesseur est stocké dans une mémoire connectée sur ce bus autre que le bus mémoire unique. Dans ce cas, le microprocesseur n'utilise que rarement la totalité de son quota.

Dans la pratique on peut disposer comme registre tampon de ligne RB d'une mémoire circulaire de 512 mots dont la partie utile est partagée en huit zones de 64 mots. Pour obtenir le quota de microproceseur, il suffit d'utiliser les trois bits les plus significatifs du nombre de mots en attente dans un registre de type FIFO comme adresse d'une mémoire auxiliaire de huit mots. Le contenu de chaque mot est le quota qui a été prédéterminé.

Sur la figure 3 est présenté un exemple de schéma par étapes permettant d'illustrer le procédé de séquencement mis en oeuvre par le dispositif selon l'invention et plus particulièrement par les moyens de séquencement microprogrammés intégrés dans le circuit d'application spécifique. Ces moyens de séquencement seront déduits aisément par l'homme de l'art une fois le procédé appréhendé. Ils sont inclus dans l'environnement du microprocesseur MP et sont de manière habituelle composés de mémoires et de registres. Le principe est le suivant : l'exécution d'une tâche implique le traitement préalable à un accès mémoire et l'exécution d'un accès mémoire. Après chaque accès la tâche est suspendue .

Comme cela a été observé précédemment, les trois tâches qui doivent être exécutées par les moyens de séquencement sont les suivantes :

- prélèvement dans la zone spécifique de la mémoire affectée à l'écran pour le chargement des registres tampons de ligne ;
- présentation d'un mot de la zone spécifique de la mémoire affectée au générateur de caractères au registre du type premier entré premier sorti ;
- servir les demandes d'accès respectivement du microprocesseur à la zone spécifique aux programmes, des registres tampons de ligne à la zone spécifique à l'écran ou du registre du type premier entré premier sorti à la zone spécifique affectée au générateur de caractères.

L'attribution d'un cycle mémoire à une des tâches précitées est basée sur le principe de la régulation du flux, c'est-à-dire sur le remplissage des différents registres. Les accès au registre FIFO sont servis de manière prioritaire en fonction des trois indications disponibles données par ledit registre. La troisième indication relative au nombre de mots W est calculée de la manière suivante sachant que :

- Tvl est la durée totale d'une ligne vidéo
- Tev est la durée de la partie utile d'une ligne vidéo
- Tch est la durée de visualisation d'un caractère dans une ligne vidéo
- Tmem est la durée d'un cycle mémoire
- Tcpu est la durée d'un cycle du microprocesseur

$$W = \frac{Tev}{Tcpu} - \left(\frac{Tev}{Tmem} - \frac{Tev}{Tch}\right) = Tev\left(\frac{1}{Tcpu} + \frac{1}{Tch} - \frac{1}{Tmem}\right)$$

ceci à la condition qu'il soit possible de charger ces mots pendant le retour ligne, c'est-à-dire si :

$$W < (Tvl - Tev) (\frac{1}{Tmem} - \frac{1}{Tcpu})$$

Selon la figure 3 qui illustre le procédé d'attribution des cycles mémoire, la décision d'attribution est basée sur :

- les demandes effectuées de la part du microprocesseur, du registre FIFO et des registres tampons de ligne ;
- les trois indications fournies par le registre FIFO;
- l'état du compteur associé aux accès du microprocesseur.

L'attribution d'un cycle mémoire durant le retour image n'est pas illustrée. En effet, dans cette phase il n'y a aucune demande de la part du générateur de caractères, par conséquent la bande passante de la mémoire est suffisante pour servir toutes les demandes du microprocesseur et celles des registres tampons de ligne. Durant le retour image, il suffit de considérer que le registre FIFO est plein, d'où FIFO > W et que le quota d'accès du microprocesseur n'est pas épuisé.

Les étapes successives proposées à la lumière de la figure 3 sont les suivantes :

A l'origine est l'état 1 qui consiste en un test des indications du registre FIFO : [FRE?] le registre est-il vide ou presque vide ? Si la réponse est oui (Y), il y a passage à l'état 2 qui correspond à un cycle [CGC] réservé au chargement prioritaire du registre FIFO pendant un cycle mémoire puis passage à l'état 3 qui consiste à tester l'instant de balayage ligne : [RL?], le dernier caractère d'une ligne vient-il d'être chargé ? Si la réponse à la question [RL?] est non (N) il y a de nouveau passage à l'état 1 puis à l'état 2 si le registre FIFO nécessite encore un chargement et enfin passage à l'état 3 et ceci tant qu'une ligne de caractères n'est pas complète et que le registre FIFO est vide ou presque vide. Si à l'état 3 la réponse est oui, l'état suivant est l'état 4 pendant lequel est calculé le quota du microprocesseur en fonction du remplissage des registres tampons de ligne : [MPQC]. Il y a ensuite retour à l'état 1. Si à l'état 1 la réponse à [FRE?] est non, il y a passage à l'état 5 qui correspond à un test de la demande d'accès du microprocesseur : [MPR?]. Si la réponse à [MPR?] est non, l'état 6 suivant correspond à un test relatif au quota du microprocesseur. [MPQE?], le quota du microprocesseur est-il épuisé ? Si la réponse à [MPQE?] est non, il y a passage à l'état 7 qui consiste en un test du contenu du registre FIFO : [FR<W?] le nombre de mots contenus dans FR est-il inférieur à W ? Si la réponse est oui (Y) l'étape suivante est l'état 2, le cycle [CGC] redevient prioritaire. Si la réponse à [FR<W?] est non, l'état 8 suivant correspond à un test de la demande d'accès des registres tampons de ligne : [RBR?]. Si la réponse à [RBR?] est oui (Y), l'état 9 suivant correspondant à un cycle [RBC] de chargement prioritaire des registres RB puis il y a retour à l'état 1. Si à l'état 8 la réponse à [RBR?] est non, l'état 10 suivant est un nouveau test du contenu du registre FIFO : [FRF?], le registre FIFO est-il plein ? Une réponse négative (N) redonne la priorité au cycle CGC de l'état 2 pour exploiter le cycle mémoire disponible, alors qu'une réponse positive provoque un retour à l'état 1 : il n'y a pas de demande en attente. En outre, lorsqu'à la question [MPQE?] de l'état 6 la réponse est oui (Y), il y a passage au test [RBR?] de l'état 8. Enfin si à la question [MPR?] de l'état 5 la réponse est oui (Y) et qu'il y a ainsi une demande d'accès du microprocesseur l'état 11 suivant correspond à un nouveau test [RBR?], y-a-t-il également une demande d'accès des registres tampons de ligne ? A une réponse négative (N) correspond un transfert à l'état 12 qui est un cycle [MPC] réservé à l'exécution d'accès demandés par le microprocesseur. A cet état 12 fait suite l'état 1. En revanche, une réponse positive à l'état 11 provoque un passage à l'état 13 qui est un nouveau test [MPQE?], le quota du microprocesseur est-il épuisé ? Si la réponse est oui (Y) l'état suivant est de nouveau l'état 9 correspondant à un cycle [RBC] de chargement prioritaire des registres tampons de ligne. Si par contre, la réponse est non le prochain état 14 correspond à une opération [MPQD] de décrémentation ou décomptage et donc de réduction du quota du microprocesseur. Cette opération est suivie d'un cycle [MPC] réservé à l'exécution d'accès demandés par le microprocesseur c'est-à-dire d'un retour à l'état 12.

Suivent quelques remarques d'intérêt général relativement à la mise en oeuvre du procédé décrit ci-dessus.

Au tout début d'une image (le registre FIFO est vide, il est cependant disposé de suffisamment de temps pour le charger avant le démarrage effectif de la visualisation), les transitions du signal d'indication "registre FIFO vide" sont utilisées pour éviter de bloquer le microprocesseur.

C'est la tâche de remplissage du registre FIFO, lors du cycle [CGC] qui provoque le rechargement du compteur associé au microprocesseur au début de chaque ligne.

Lors de la mise en oeuvre du procédé de séquencement, il est essentiel d'utiliser pleinement la bande passante de la mémoire unique, pour cela il est nécessaire d'effectuer des opérations préparatoires à un cycle mémoire durant l'exécution du cycle précédent et par conséquent le temps de traitement interne doit être inférieur au temps d'accès mémoire. Toutefois, certains traitements peuvent déborder, par exemple en fin de ligne, dans ce cas il faut en tenir compte dans le calcul de la bande passante de la mémoire, ceci induisant une variation d'environ 1 à 2 % sur le temps d'accès à la mémoire.

Pour conclure, compte tenu des expériences et des simulations, il faut utiliser une mémoire unique de l'ordre de 15 % plus rapide que la mémoire de l'art antérieur normalement destinée au générateur de caractères. En ajoutant à cette mémoire un registre FIFO qui permet d'étaler la lecture du générateur de caractères, des registres tampons de ligne qui permettent de réduire le débit occasionné par la lecture de la zone affectée à l'écran et une antémémoire de petite taille qui permet d'améliorer le taux de succès et de réduire la charge occasionnée par le microprocesseur, la bande passante de la mémoire devient suffisante pour satisfaire aux besoins du microprocesseur et de la partie vidéo.

## Revendications

1. Dispositif d'entrée sortie de données pour l'affichage d'informations sur un écran élaboré autour d'un microprocesseur coopérant au moyen d'une pluralité de lignes de bus d'une part avec des moyens de mémorisation affectés aux programmes du microprocesseur et d'autre part avec la partie vidéo par l'intermédiaire de moyens de mémorisation affectés à l'écran, et de moyens de mémorisation affectés à un générateur de caractères, caractérisé en ce qu'il est monolithiquement intégré dans un circuit d'application spécifique, les différents moyens de mémorisation précités étant principalement constitués d'une mémoire unique dans laquelle des zones spécifiques respectivement aux programmes, à l'écran et du générateur de caractères ont été allouées pour stocker les informations auxquelles il est désiré accéder, l'accès aux différentes zones spécifiques étant autorisé par une ligne de bus mémoire unique et géré selon un procédé de séquencement mis en oeuvre par des moyens de séquencement microprogrammés.

2. Dispositif d'entrée sortie de données pour l'affichage d'informations sur un écran selon la revendication 1 caractérisé en ce que les moyens de mémorisation comportent associée à la mémoire unique une antémémoire de petite taille insérée entre le microprocesseur et la ligne de bus mémoire unique.

3. Dispositif d'entrée sortie de données pour l'affichage d'informations sur un écran selon la revendication 1 ou 2 caractérisé en ce que les moyens de mémorisation comportent de plus un registre du type premier entré premier sorti inséré entre la partie vidéo et la ligne de mémoire unique.

4. Dispositif d'entrée sortie de données pour l'affichage d'informations sur un écran selon la revendication 3 caractérisé en ce que le registre du type premier entré premier sorti fournit en outre trois indications relatives à son état : registre plein, registre vide ou presque vide et nombre de mots dans le registre inférieur à W, W étant le nombre de mots qu'il faut accumuler dans le registre pour pouvoir servir toutes les demandes du microprocesseur pendant la partie utile du balayage ligne de la partie vidéo.

5. Dispositif d'entrée sortie de données pour l'affichage d'informations sur un écran selon l'une des revendications 1 à 4 caractérisé en ce que les moyens de mémorisation comportent en outre au moins deux registres tampons de ligne insérés entre la partie vidéo et la ligne de bus mémoire unique.

6. Procédé de séquencement pour la distribution des cycles mémoire et la régulation du flux à l'intérieur des moyens de mémorisation du dispositif selon les revendications 1 à 5 caractérisé en ce que, l'attribution d'un cycle mémoire est réalisée en synchronisme avec la fréquence de balayage ligne de la partie vidéo et décidée subséquemment à une série de tests destinés à déterminer la priorité pour l'exécution des différentes tâches, notamment le prélèvement dans la zone spécifique de la mémoire affectée à l'écran pour le chargement des registres tampons de ligne, la présentation d'un mot de la zone spécifique de la mémoire affectée au générateur de caractères au registre du type premier entré premier sorti ou toute demande d'accès respectivement du microprocesseur à la zone spécifique aux programmes, des registres tampons de ligne à la zone spécifique à l'écran ou du registre du type premier entré premier sorti à la zone spécifique affectée au générateur de caractères.

7. Procédé de séquencement selon la revendication 6 caractérisé en ce que l'attribution des cycles mémoire est décidée à la suite d'une série de tests tenant compte d'une part des demandes du microprocesseur et du quota d'accès qui lui est attribué, du générateur de caractères et des registres tampons de ligne, d'autre part des trois indications relatives au remplissage du registre du type premier entré premier sorti et enfin de l'état d'un compteur associé aux accès du microprocesseur, les résultats des tests étant exploités de telle manière que :
   - tant que le registre premier entré premier sorti est vide ou presque vide, le chargement dudit registre soit prioritaire ;

- si le registre premier entré premier sorti n'est pas vide ou presque vide, les accès du microprocesseur soient prioritaires tant que le quota d'accès attribué au microprocesseur n'est pas épuisé, sachant qu'en outre un cycle n'est comptabilisé dans ledit quota que si les registres tampons de ligne ne sont pas pleins ;
- le remplissage des registres tampons de ligne soit prioritaire par rapport au remplissage du registre premier entré premier sorti si le nombre de mots en attente dans ce dernier registre est supérieur à W ou si le quota attribué au microprocesseur est épuisé et que de plus le registre premier entré premier sorti n'est pas vide ou presque vide.

8. Procédé de séquencement selon la revendication 7 caractérisé en ce que le quota d'accès attribué au microprocesseur une fois déterminé reste valable jusqu'à ce que le registre premier entré premier sorti soit plein ou qu'un quota inférieur soit requis pour garantir le chargement des registres tampons de ligne, à chaque retour ligne le quota qui est déterminé en fonction du remplissage du registre premier entré premier sorti devenant le quota effectif du microprocesseur si ce dernier registre est plein ou si ce quota est inférieur au dernier quota déterminé.

9. Procédé de séquencement selon la revendication 7 caracterisé en ce que le quota d'accès attribué au microprocesseur est, à chaque retour de ligne, déterminé pour la prochaine tranche de temps, tranche de temps qui correspond à la durée totale du balayage d'une ligne, le chargement du registre premier entré premier sorti étant alors effectué suivant une courbe de la forme $y = k (1 - a^{-x})$, où en première approximation k représente la taille d'une mémoire circulaire utilisée en tant que registre tampon de ligne et a est une fonction du nombre de colonnes de caractères et du nombre k, x étant une variable liée à la hauteur d'une cellule caractère alors que le résultat y donne le nombre de caractères dans les registres tampons de ligne à la fin de chaque balayage de ligne.

## Patentansprüche

1. Dateneingangs-/-ausgangseinrichtung zur Anzeige von Informationen auf einem Bildschirm, der in der Umgebung eines Mikroprozessors gebildet ist, welcher mittels mehrerer Busleitungen einerseits mit Speichermitteln, die den Programmen des Mikroprozessors zugeordnet sind und andererseits über Speichermittel, die dem Bildschirm zugeordnet sind, sowie über Speichermittel, die einem Zeichengenerator zugeordnet sind, mit dem Videoteil zusammenwirkt, dadurch gekennzeichnet, daß er in eine spezifische Anwenderschaltung monolithisch integriert ist, wobei die verschiedenen obengenannten Speichermittel hauptsächlich von einem einzigen Speicher gebildet sind, in dem spezifische Zonen für die Programme, den Bildschirm bzw. den Zeichengenerator vorgesehen sind, um die Informationen zu speichern, auf die zugegriffen werden soll, wobei der Zugriff auf die verschiedenen spezifischen Zonen von einer einzigen Speicherbusleitung zugelassen wird und gemäß einem Ablaufsteuerverfahren gesteuert wird, das durch mikroprogrammierte Ablaufsteuermittel ausgeführt wird.

2. Dateneingangs-/-ausgangseinrichtung zur Anzeige von Informationen auf einem Bildschirm gemäß Anspruch 1, dadurch gekennzeichnet, daß die Speichermittel einen Cachespeicher kleiner Größe enthalten, der dem einzigen Speicher zugehört und zwischen den Mikroprozessor und die einzige Speicherbusleitung geschaltet ist.

3. Dateneingangs-/-ausgangseinrichtung zur Anzeige von Informationen auf einem Bildschirm gemäß Anspruch 1 oder 2, dadurch gekennzeichnet, daß die Speichermittel außerdem ein Register vom FIFO-Typ enthalten, das zwischen den Videoteil und die einzige Speicherleitung geschaltet ist.

4. Dateneingangs-/-ausgangseinrichtung zur Anzeige von Informationen auf einem Bildschirm gemäß Anspruch 3, dadurch gekennzeichnet, daß das Register vom FIFO-Typ außerdem drei auf seinen Zustand bezogene Angaben ausgibt: Register voll, Register leer oder fast leer und Anzahl der Wörter im Register kleiner als W, wobei W die Anzahl der Wörter ist, die im Register akkumuliert werden müssen, um sämtliche Anforderungen des Mikroprozessors während des Nutzanteils der Zeilenabtastung durch den Videoteil bedienen zu können.

5. Dateneingangs-/-ausgangseinrichtung zur Anzeige von Informationen auf einem Bildschirm gemäß einem der Ansprüche 1 bis 4, dadurch gekennzeichnet, daß die Speichermittel außerdem wenigstens zwei Zeilen-Pufferregister aufweisen, die zwischen den Videoteil und die einzige Speicherbusleitung geschaltet sind.

6. Ablaufsteuerverfahren für die Verteilung der Speicherzyklen und für die Steuerung des Flusses innerhalb der Speichermittel der Einrichtung gemäß den Ansprüchen 1 bis 5, dadurch gekennzeichnet, daß die Zuordnung eines Speicherzyklus synchron zur Zeilenabtastfrequenz des Videoteils ausgeführt und im Anschluß an eine Reihe von Prüfungen entschieden wird, welche dazu vorgesehen sind, die Priorität für die Abarbeitung der verschiedenen Aufgaben zu bestimmen, insbesondere die Datenentnahme aus der dem Bildschirm zugewiesenen spezifischen Zone des Speichers, um die Zeilen-Pufferregister zu laden, die Lieferung eines Wortes der dem Zeichengenerator zugeordneten spezifischen Zone des Speichers an das Register vom FIFO-Typ oder jede Zugriffsanforderung des Mikroprozessors auf die für die Programme spezifische Zone, der Zeilen-Pufferregister auf die für den Bildschirm spezifische Zone oder des Registers vom FIFO-Typ auf die dem Zeichengenerator zugeordnete spezifische Zone.

7. Ablaufsteuerverfahren gemäß Anspruch 6, dadurch gekennzeichnet, daß die Zuordnung der Speicherzyklen nach einer Reihe von Prüfungen entschieden wird, die einerseits Anforderungen des Mikroprozessors und die ihm zugeordnete Zugriffsrate sowie Anforderungen des Zeichengenerators und der Zeilen-Pufferregister und andererseits drei auf den Füllzustand des Registers vom FIFO-Typ bezogene Angaben und schließlich den Zustand eines auf die Zugriffe des Mikroprozessors bezogenen Zählers berücksichtigen, wobei die Prüfergebnisse so genutzt werden, daß:
   - solange, wie das FIFO-Register leer oder fast leer ist, das Laden dieses Registers Priorität hat;
   - dann, wenn das FIFO-Register nicht leer oder nicht fast leer ist, die Zugriffe des Mikroprozessors Priorität besitzen, solange die dem Mikroprozessor zugeordnete Zugriffsrate nicht ausgeschöpft ist, weil nämlich außerdem ein Zyklus in der Rate nur berücksichtigt wird, wenn die Zeilen-Pufferregister nicht voll sind;
   - die Füllung der Zeilen-Pufferregister gegenüber der Füllung des FIFO-Registers Priorität besitzt, wenn die Anzahl der in diesem letzteren Register wartenden Wörter größer als W ist oder wenn die dem Mikroprozessor zugeordnete Rate erschöpft ist, und wenn außerdem das FIFO-Register nicht leer oder nicht fast leer ist.

8. Ablaufsteuerverfahren gemäß Anspruch 7, dadurch gekennzeichnet, daß die einmal bestimmte dem Mikroprozessor zugeordnete Zugriffsrate solange gültig bleibt, bis das FIFO-Register voll ist oder bis eine kleinere Rate gefordert ist, um das Laden der Zeilen-Pufferregister bei jedem Zeilenrücksprung zu gewährleisten, wobei die Rate, die in Abhängigkeit vom Füllzustand des FIFO-Registers bestimmt wird, die effektive Rate des Mikroprozessors wird, wenn dieses letztere Register voll ist oder wenn diese Rate kleiner als die zuletzt bestimmte Rate ist.

9. Ablaufsteuerverfahren gemäß Anspruch 7, dadurch gekennzeichnet, daß die dem Mikroprozessor zugeordnete Zugriffsrate bei jedem Zeilenrücksprung für die nächste Zeitscheibe bestimmt wird, welche der Gesamtdauer der Abtastung einer Zeile entspricht, wobei das Laden des FIFO-Registers dann längs einer Kurve der Form $y = k(1 - a^{-x})$ ausgeführt wird, wobei k in erster Näherung die Größe eines zirkulären Speichers darstellt, der als Zeilen-Pufferregister verwendet wird, wobei a eine Funktion der Anzahl von Spalten von Zeichen und der Zahl k ist und wobei x eine Variable ist, die mit der Höhe einer Zelle in Verbindung steht, während das Ergebnis y die Anzahl der Zeichen in den Zeilen-Pufferregistern am Ende einer jeden Zeilenabtastung angibt.

## Claims

1. A data input/output device for the display of information on a screen developed around a microprocessor cooperating by means of a plurality of bus lines with memorising means assigned to the programs of the microprocessor, on the one hand, and on the other hand with the video portion by way of memorising means assigned to the screen, and memorising means assigned to a character generator, characterised in that it is monolithically integrated in a specific application circuit, the various aforementioned memorising means being principally constituted by a single memory in which specific zones respectively for the programs, screen and character generator have been allocated for storing the information to which access is desired, the access to the various specific zones being authorised by a single memory bus line and being administered according to a sequencing method implemented by microprogrammed sequencing means.

2. A data input/output device for the display of information on a screen according to claim 1, characterised in that the memorising means comprise, associated with the single memory, a small-sized cache memory inserted between the microprocessor and the single memory bus line.

3. A data input/output device for the display of information on a screen according to claim 1 or 2, characterised in that the memorising means further comprise a register of the first-in/first-out type, inserted between the video portion and the single memory bus line.

4. A data input/output device for the display of information on a screen according to claim 3, characterised in that the register of the first-in/first-out type furthermore furnishes three indications relating to its state: register full, register empty or nearly empty and number of words in the register less than W, W being the number of words that must be accumulated in the register to be capable of meeting all the requests of the microprocessor during the useful portion of the line scanning of the video portion.

5. A data input/output device for the display of information on a screen according to one of claims 1 to 4, characterised in that the memorising means further comprise at least two line buffer registers inserted between the video portion and the single memory bus line.

6. A sequencing method for the distribution of memory cycles and regulation of the flow inside memorising means of a device according to claims 1 to 5, characterised in that the allocation of a memory cycle is carried out in synchronism with the line scanning frequency of the video portion and decided subsequently to a series of tests intended to determine the priority for the execution of the various tasks, notably sampling in the specific zone of the memory assigned to the screen for loading the line buffer registers, presenting a word from the specific zone of the memory assigned to the character generator to the first-in/ first-out type register, or any request for access respectively by the microprocessor to the specific zone for programs, by the line buffer registers to the specific zone for the screen, or by the first-in/first-out type register to the specific zone assigned to the character generator.

7. A sequencing method according to claim 6, characterised in that the allocation of the memory cycles is decided following a series of tests taking into account, on the one hand, requests by the microprocessor and the access quota allocated to it, requests by the character generator and requests by the line buffer registers, and on the other hand three indications relating to filling of the first-in/ first-out type register, and finally the state of a counter associated with access to the microprocessor, the results of the tests being exploited in such a way that:
   - as long as the first-in/first-out register is empty or nearly empty, loading of said register has priority;
   - if the first-in/first-out register is not empty or nearly empty, accesses by the microprocessor have priority, as long as the access quota allocated to the microprocessor is not exhausted, knowing that furthermore a cycle is only counted in this quota if the line buffer registers are not full;
   - filling of the line buffer registers has priority with respect to filling of the first-in/first-out register if the number of words in a queue in the latter register is greater than W or if the access quota allocated to the microprocessor is exhausted and also the first-in/first-out register is not empty or nearly empty.

8. A sequencing method according to claim 7, characterised in that the access quota allocated to the microprocessor, once determined, remains valid until the first-in/ first-out register is full or until a lower quota is required to guarantee loading of the line buffer registers, upon each line return, the quota, which is determined as a function of the filling of the first-in/first-out register, becoming the effective quota of the microprocessor, if this latter register is full or if this quota is less than the latter determined quota.

9. A sequencing method according to claim 7, characterised in that the access quota assigned to the microprocessor is determined, upon each line return, for the next time slot, the time slot corresponding to the total duration of scanning of one line, the loading of the first-in/first-out register then being performed in accordance with a curve of the form $y = k(1 - a^{-x})$, where in a first approximation k represents the size of a circular memory used as a line buffer register, and a is a function of the number of columns of characters and of the number k, x being a variable linked to the height of a character cell, while the result y gives the number of characters in the line buffer registers at the end of each line scanning.

FIG.1

FIG.2

FIG.3